# EUROPÄISCHE PATENTSCHRIFT

(11) **EP 1 510 410 B1**
(45) Veröffentlichungstag und Bekanntmachung des Hinweises auf die Patenterteilung: **20.12.2006**
(21) Anmeldenummer: 04103982.7
(22) Anmeldetag: 19.08.2004
(51) Int. Cl.: B60R 16/02

(54) **Fahrerinformationseinrichtung**
Driver information device
Dispositif d'information du conducteur

(30) Priorität: 28.08.2003 DE 10339646
(43) Veröffentlichungstag der Anmeldung: 02.03.2005
(73) Patentinhaber: ROBERT BOSCH GMBH, 70442 Stuttgart (DE)
(72) Erfinder: Engelsberg, Andreas, 31141, Hildesheim (DE); Manstetten, Dietrich, 71139, Ehningen (DE); Kussmann, Holger, 31180, Giesen (DE); Placke, Lars, 30163, Hannover (DE); Stoerzel, Marc, 70825, Korntal-Muenchingen (DE); Schweiger, Ulrich, 70180, Stuttgart (DE)

(56) Entgegenhaltungen:
- EP-A- 0 732 892
- WO-A-00/58131
- DE-A- 10 158 939

## Beschreibung

### Stand der Technik

Die Erfindung betrifft eine Fahrerinformationseinrichtung in einem Fahrzeug, das eine Ein-Ausgabe-Schnittstelle für mindestens eine Eingabeeinheit und mindestens eine Ausgabeeinheit und Steuerungsmittel zur Einstellung von Konfigurationsparametern der Fahrerinformationseinrichtung aufweist.

Fahrerinformationseinrichtungen für Kraftfahrzeuge sind hinreichend bekannt. Sie bieten verschiedene Funktionalitäten in einer Einrichtung, wie beispielsweise Navigationsgerät, Radio, Mobiltelefon mit Freisprecheinrichtung etc. Zur Ein- und Ausgabe von Informationen und Steuerungsdaten sind verschiedene Eingabeeinheiten und Ausgabeeinheiten fest installiert, wie beispielsweise Sprachein- und Ausgabeeinrichtungen, Tastatureingabeeinheiten, Dreh-Drückregler, Touch Screens, Displays für verschiedene visuelle Darstellungen, wie Grafiken, Texte etc., oder ähnliches. Die Konfiguration der jeweiligen Ein-Ausgabe-Schnittstelle und der damit verbundenen Ein- und Ausgabemodalitäten werden von dem Hersteller des Fahrerinformationssystems fest vorgegeben.

Weiterhin ist aus der DE 199 52 854 C1, das die Merkmale des Oberbegriffs des Anspruchs 1 zeigt, eine Assistenzvorrichtung bekannt, bei der für eine durch ein Objekterkennungssystem erkannte Person ein Benutzerprofil für diese Person geladen wird, das Einstellungen innerhalb des Fahrzeugs bestimmt. Damit können Informationen von verschiedenen Datenquelle durch Voreinstellungen, die in dem Benutzerprofil abgespeichert sind, kanalisiert werden, so dass der Fahrer vorteilhafterweise nur die Informationen erhält, die er auch wünscht.

Aufgabe der Erfindung ist es, eine verbesserte Fahrerinformationseinrichtung in einem Fahrzeug zu schaffen, bei der ein Nutzer Einfluss auf die Ein- und Ausgabemodalitäten der Fahrerinformationseinrichtung nehmen kann.

Die Aufgabe wird durch die gattungsgemäße Fahrerinformationseinrichtung erfindungsgemäß dadurch gelöst, dass die Steuerungsmittel zur Konfiguration der Ein-Ausgabe-Schnittstelle vorgesehen sind, um wahlweise unterschiedliche Eingabeeinheiten und/oder Ausgabeeinheiten für die Ein- und Ausgabe von Informationen oder Steuerungsdaten festzulegen und die festgelegte Konfiguration als Konfigurationsparameter abzuspeichern.

Im Unterschied zu der DE 199 52 854 C1 erfolgt somit keine Konfiguration des Informationsflusses selbst, sondern eine Konfiguration der Ein-Ausgabe-Schnittstelle. Damit kann der Nutzer die Fahrerinformationseinrichtung hinsichtlich der Eingabeeinheiten und Ausgabeeinheiten beliebig konfigurieren und die Fahrerinformationseinrichtung nach seinen Wünschen anpassen.

Die Konfiguration kann entweder automatisch, durch den Fahrer oder durch Voreinstellung vor dem Kauf erfolgen.

Die damit mögliche einmalige Konfiguration der Fahrerinformationseinrichtung durch den Nutzer vor dem Kauf hat den weiteren Vorteil, dass eine größere Attraktivität der Fahrerinformationseinrichtung durch individuelle Kosten- und Bedarfsanpassung erreicht werden kann.

Insbesondere für Fahrzeuge, die von mehreren Fahrern benutzt werden, ist es vorteilhaft, wenn die Steuerungsmittel zur benutzerabhängigen Speicherung der Konfigurationsparameter ausgebildet sind.

Weiterhin können die Steuerungsmittel zur automatischen Konfiguration der Ein-Ausgabe-Schnittstelle durch Aktivierung oder Deaktivierung ausgewählter Eingabeeinheiten und/oder Ausgabeeinheiten in Abhängigkeit von aktuell aktivierten Funktionen oder Betriebssituationen der Fahrerinformationseinrichtung ausgebildet sein. Dies hat den Vorteil, dass die Fahrerinformationseinrichtung abhängig von der aktuellen Situation selbstständig Ein- oder Ausgabemodalitäten aktiviert oder deaktiviert, um beispielsweise den Nutzer situationsabhängig effizienter zu unterstützen.

Vorteilhaft ist es aber auch, dass der Nutzer die Konfiguration zur beliebiger Zeit ändern kann, um so je nach Situation zu entscheiden, ob ein bestimmtes ressourcenintensives Feature genutzt werden soll oder Wert auf eine schnelle Bedienung gelegt wird. Beispielsweise kann durch die temporäre Deaktivierung einer Sprachein- oder Ausgabe die Systemperformance erhöht werden.

Weiterhin ist es vorteilhaft, wenn die Steuerungsmittel zur Konfiguration der Ein-Ausgabe-Schnittstelle jeweils bezogen auf einzelne Funktionalitäten der Fahrerinformationseinrichtung, beispielsweise bezogen auf eine Navigationsfunktionalität, eine Radiofunktionalität, eine Mobilfunktelefonfunktionalität, ausgebildet sind. Damit kann für jede Funktion der Fahrerinformationseinrichtung gesondert die optimale Ein- und Ausgabemodalität festgelegt werden.

Die Erfindung wird nachfolgend anhand der beigefügten Zeichnung näher erläutert. Sie zeigt:

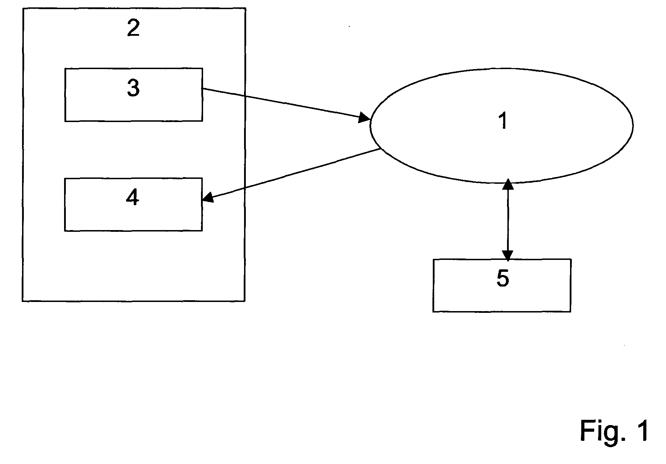

Figur 1 - Blockdiagramm einer Fahrerinformationseinrichtung mit Ein-Ausgabe-Schnittstelle und Steuerungsmitteln zur Einstellung von Konfigurationsparametern.

Die Figur 1 lässt eine Fahrerinformationseinrichtung 1 in einem Fahrzeug erkennen, die über eine Ein-Ausgabe-Schnittstelle 2 mit verschiedenartigen Eingabeeinheiten 3 und Ausgabeeinheiten 4 für Informationen- und Steuerungsdaten verbunden ist. Als Eingabeeinheiten können beispielsweise Tastatureingabeeinheiten, Dreh-Drückregler, Touch Screens und Spracheingabeeinheiten eingesetzt werden. Als Ausgabeeinheiten können Displays für beliebig modifiziertbare visuelle Darstellung, wie Grafiken, Texte etc., akustische Ausgabeeinheiten, Sprachausgabeeinheiten, Touch Screens etc. vorgesehen sein.

Weiterhin ist die Fahrerinformationseinrichtung mit Steuerungsmitteln 5 zur Einstellung von Konfigurationsparametern der Fahrerinformationseinrichtung 1 verbunden. Die Fahrerinformationseinrichtung 1 greift beim Einschalten und während des Betriebes über die Steuermittel 5 auf die Konfigurationsparameter zu, um Parameter und Funktionalitäten der Fahrerinformationseinrichtung 1 einzustellen.

Erfindungsgemäß sind die Steuerungsmittel 5 zur Konfiguration der Ein-Ausgabe-Schnittstelle 2 vorgesehen, um wahlweise unterschiedliche Eingabeeinheiten 3 und/oder Ausgabeeinheiten 4 für die Ein- und Ausgabe von Informationen oder Steuerungsdaten festzulegen. Dabei wird die festgelegte Konfiguration als Konfigurationsparameter in einem Speicher der Steuerungsmittel 5 oder eine mit der Fahrerinformationseinrichtung 1 gekoppelten Speicher abgelegt.

Für die Ansteuerung der Ein- und Ausgabeeinheiten 3, 4 greift die Fahrerinformationseinrichtung 1 auf die Konfigurationsparameter zurück und stellt mit Hilfe der Steuerungsmittel 5 die Ein-Ausgabe-Schnittstelle 2 ein, um die Ein- und Ausgabemodalitäten der Fahrerinformationseinrichtung 1 an die Konfigurationsparameter anzupassen. Dabei kann die Konfiguration einmalig festgelegt oder durch den Nutzer zu beliebiger Zeit geändert werden.

Die Konfigurationsparameter können durch die Steuerungsmittel 5 auch so verwaltet werden, dass für die verschiedenen Funktionalitäten der Fahrerinformationseinrichtung 1 verschiedene Ein- und Ausgabemodalitäten festgelegt werden.

Durch personenbezogene Abspeicherung der Konfigurationsparameter ist es zudem möglich, dass verschiedene Nutzer ihre eigene Konfiguration verwenden und die Fahrerinformationseinrichtung nach ihren Wünschen anpassen können, so dass Unterschiede bezüglich der Akzeptanz und Präferenz verschiedener Ein-Ausgabe-Konfigurationen zwischen verschiedenen Nutzern ausgeglichen werden können.

Durch Zugriff der Steuerungsmittel 5 auf Daten der Fahrerinformationseinrichtung, die aktivierte Funktionen oder Betriebssituationen angibt, kann auch ein Wechsel der Ein-Ausgabe-Modalitäten in Abhängigkeit von der jeweiligen Betriebssituation erfolgen. Hierzu werden die Konfigurationsparameter in Abhängigkeit von aktivierten Funktionen oder Betriebssituationen festgelegt.

Das Einladen der Konfigurationsparameter in das Fahrzeug kann auf eine beliebige Übertragungsweise erfolgen.

## Patentansprüche

1. Fahrerinformationseinrichtung (1) in einem Fahrzeug, das eine Ein-Ausgabe-Schnittstelle (2) für mindestens eine Eingabeeinheit (3) und mindestens eine Ausgabeeinheit (4), und Steuerungsmittel (5) zur Einstellung von Konfigurationsparametern der Fahrerinformationseinrichtung (1) aufweist, **dadurch gekennzeichnet, dass** die Steuerungsmittel (5) zur Konfiguration der Ein-Ausgabe-Schnittstelle (2) vorgesehen sind, um wahlweise unterschiedliche Eingabeeinheiten (3) und/oder Ausgabeeinheiten (4) für die Ein- und Ausgabe von Informationen oder Steuerungsdaten festzulegen und die festgelegte Konfiguration als Konfigurationsparameter abzuspeichern.

2. Fahrerinformationseinrichtung (1) nach Anspruch 1, **dadurch gekennzeichnet, dass** die Steuerungsmittel (5) zur benutzerabhängigen Speicherung der Konfigurationsparameter ausgebildet sind

3. Fahrerinformationseinrichtung (1) nach einem der vorhergehenden Ansprüche, **dadurch gekennzeichnet, dass** die Steuerungsmittel (5) zur automatischen Konfiguration der Ein-Ausgabe-Schnittstelle (2) durch Aktivierung oder Deaktivierung ausgewählter Eingabeeinheiten (3) und/oder Ausgabeeinheiten (4) in Abhängigkeit von aktuell aktivierten Funktionen oder Betriebssituationen der Fahrerinformationseinrichtung (1) ausgebildet sind.

4. Fahrerinformationseinrichtung (1) nach einem der vorhergehenden Ansprüche, **dadurch gekennzeichnet, dass** die Steuerungsmittel (5) zur Konfiguration der Ein-Ausgabe-Schnittstelle (2) jeweils bezogen auf einzelne Funktionalitäten der Fahrerinformationseinrichtung (1), beispielsweise bezogen auf eine Navigationsfunktionalität, eine Radiofunktionalität, eine Mobiltelefonfunktionalität, ausgebildet ist.

## Claims

1. Driver information device (1) in a vehicle which has an input/output interface (2) for at least one input unit (3) and at least one output unit (4) and control means (5) for setting configuration parameters for the driver information device (1), **characterized in that** the control means (5) are provided for configuring the input/output interface (2) in order to stipulate different input units (3) and/or output units (4) selectively for inputting and outputting information or control data and to store the stipulated configuration as a configuration parameter.

2. Driver information device (1) according to Claim 1, **characterized in that** the control means (5) are designed for user-dependent storage of the configuration parameters.

3. Driver information device (1) according to one of the preceding claims, **characterized in that** the control means (5) are designed for automatically configuring the input/output interface (2) by activating or deactivating selected input units (3) and/or output units (4) on the basis of currently activated functions or operating situations for the driver information device (1).

4. Driver information device (1) according to one of the preceding claims, **characterized in that** the control means (5) are designed for configuring the input/output interface (2) in each case on the basis of individual functionalities of the driver information device (1), for example on the basis of a navigation functionality, a radio functionality, a mobile telephone functionality.

## Revendications

1. Installation d'information du conducteur (1) d'un véhicule comportant une interface entrée/ sortie (2) pour au moins une unité d'entrée (3) et au moins une unité de sortie (4) et des moyens de commande (5) pour régler les paramètres de configuration d'installation d'information du conducteur (1),
**caractérisé en ce que**
des moyens de commande (5) sont prévus pour la configuration de l'interface entrée/ sortie (2) pour fixer sélectivement des unités d'entrée (3) différentes et/ou des unités de sortie (4) pour une entrée et une sortie d'informations ou des données de commande et la configuration fixée est mise en mémoire sous la forme des paramètres de configuration.

2. Installation d'information du conducteur (1) selon la revendication 1,
**caractérisée en ce que**
les moyens de commande (5) sont réalisés pour mémoriser les paramètres de configuration en fonction de l'utilisateur.

3. Installation d'information du conducteur (1) selon l'une des revendications précédentes,
**caractérisée en ce que**
les moyens de commande (5) sont prévus pour configurer automatiquement l'interface entrée/sortie (2) en activant ou en neutralisant des unités d'entrée (3) sélectionnées et/ou des unités de sortie (4) sélectionnées selon les fonctions activées actuellement ou les situations de fonctionnement de l'installation d'informations de conducteur (1).

4. Installation d'information du conducteur (1) selon l'une des revendications précédentes,
**caractérisée en ce que**
les moyens de commande (5) du configuration de l'interface entrée/sortie (2) sont réalisés vis-à-vis des différentes fonctionnalités de l'installation d'informations de conducteur (1) par exemple de façon liée à une fonctionnalité de navigation, une fonctionnalité radio, une fonctionnalité de téléphone mobile.
